# EUROPÄISCHE PATENTSCHRIFT

(11) **EP 3 889 355 B1**
(45) Veröffentlichungstag und Bekanntmachung des Hinweises auf die Patenterteilung: **02.08.2023**
(21) Anmeldenummer: 21166679.7
(22) Anmeldetag: 01.04.2021
(51) Int. Cl.: E01C 23/088, E01C 23/12, E01C 21/00, B28D 1/18, B28D 7/00, E02F 9/22

(54) **SELBSTFAHRENDE BAUMASCHINE UND VERFAHREN ZUM BEARBEITEN VON BODENBELÄGEN**
SELF-PROPELLED CONSTRUCTION VEHICLE AND METHOD OF WORKING FLOORING
ENGIN DE CONSTRUCTION AUTOMOTEUR ET MÉTHODE DE TRAVAIL DE REVÊTEMENT DE SOL

(30) Priorität: 03.04.2020 DE 102020204383
(43) Veröffentlichungstag der Anmeldung: 06.10.2021
(73) Patentinhaber: Wirtgen GmbH, 53578 Windhagen (DE)
(72) Erfinder: Berning, Christian, 53909 Zülpich (DE); Drumm, Sebastian, 51503 Rösrath (DE)
(74) Vertreter: dompatent von Kreisler Selting Werner - Partnerschaft von Patent- und Rechtsanwälten mbB

(56) Entgegenhaltungen:
- EP-A1- 0 916 004
- US-A1- 2013 000 996

## Beschreibung

Die Erfindung betrifft eine selbstfahrende Baumaschine nach dem Oberbegriff des Anspruchs 1, sowie ein Verfahren zum Bearbeiten von Bodenbelägen nach dem Oberbegriff des Anspruchs 13.

Es sind selbstfahrende Baumaschinen, insbesondere Straßenfräsmaschinen, bekannt, die einen Maschinenrahmen und zumindest drei Fahreinrichtungen, und zumindest eine Arbeitseinrichtung, insbesondere eine Fräswalze zum Bearbeiten des Bodenbelags aufweisen.

US2013000996 offenbart eine Baumaschine mit einem Maschinenrahmen und Fahreinrichtungen und einem hydraulischen Antriebssystem zum Antreiben der Fahreinrichtungen.

EP0916004 offenbart eine Straßenbaumaschine mit einem selbstfahrenden Fahrwerk bestehend aus einer lenkbaren vorderen Fahrwerkachse mit mindestens einem Stützrad und zwei hinteren Stützrädern, wobei ein hinteres Stützrad aus einer über eine Seite de Straßenbaumaschine vorstehenden äußeren Endposition in eine eingeschwenkte innere Endposition verschwenkbar ist.

Ferner weisen solche selbstfahrenden Baumaschinen zumindest ein hydraulisches Antriebssystem zum Antreiben mindestens zweier Fahreinrichtungen auf, wobei das hydraulische Antriebssystem zumindest eine hydraulische Pumpe aufweist, wobei das hydraulische Antriebssystem an jeder der angetriebenen Fahreinrichtungen wenigstens einen Motor und ein zwischen Motor und Fahreinrichtung angeordnetes Getriebe aufweisen. Besonders bevorzugt ist bei einer angetriebenen Fahreinrichtung ein hydraulischer Konstantmotor und zum Antreiben der restlichen angetriebenen Fahreinrichtung jeweils ein hydraulischer Verstellmotor zum Antrieb der Fahrrichtung über jeweils ein Getriebe vorgesehen.

Im Stand der Technik werden Konstantmotoren beispielsweise an den angetriebenen Fahreinrichtungen verwendet, die als schwenkbare Fahreinrichtungen ausgeführt sind, weil ein hydraulischer Konstantmotor einen geringeren Bauraum aufweist als ein hydraulischer Verstellmotor. Eine schwenkbare Fahreinrichtung kann um mindestens eine vertikale Schwenkachse gegenüber dem Maschinenrahmen von zumindest einer ersten eingeschwenkten in wenigstens eine zweite ausgeschwenkten Position verschwenkbar sein. Die Arbeitseinrichtung kann auf einer Seite des Maschinenrahmens, nämlich auf der sogenannten Nullseite des Maschinenrahmens, bündig mit diesem abschließen. Die schwenkbare Fahreinrichtung kann an dieser Nullseite des Maschinenrahmens angeordnet sein, wobei die schwenkbare Fahreinrichtung in der ersten eingeschwenkten Position nicht gegenüber dem Maschinenrahmen auf der Nullseite hervorsteht und in der wenigstens zweiten ausgeschwenkten Position gegenüber der Nullseite hervorsteht. Die schwenkbare Fahreinrichtung kann vorzugsweise eine hintere Fahreinrichtung sein.

Wenn die Arbeitseinrichtung beispielsweise kantennah an einer Hauswand oder einem ähnlichen Hindernis fräst, kann die schwenkbare Fahreinrichtung in die erste eingeschwenkte Position überführt werden, wodurch die Baumaschine deutlich näher an das Hindernis heranfahren kann als es der Fall wäre, wenn die Fahreinrichtung neben der Arbeitseinrichtung angeordnet wäre und sich in der ausgeschwenkten Position befinden würde. Andererseits ist es beim nichtkantennahen Fräsen erwünscht, wenn die Fahreinrichtung neben der Arbeitseinrichtung angeordnet ist, dass die Maschine eine bessere stabile Abstützung erreicht.

Es besteht jedoch häufig das Problem, dass bei den schwenkbaren angetriebenen Fahreinrichtungen Konstantmotoren vorgesehen sind und dadurch, dass die schwenkbaren Fahreinrichtungen jeweils neben oder nahe der jeweiligen Fräswalze angeordnet sind, bei diesen schwenkbaren Fahreinrichtungen ein Schlupf früher auftreten kann, als dies bei den weiter entfernt von der Arbeitseinrichtung angeordneten Laufwerken der Fall ist. Die Arbeitseinrichtung, insbesondere die Fräswalze, übt beim Bearbeiten des Untergrunds Kraft auf den Untergrund aus. Bei einer Fräswalze dringen beispielsweise Meißel von oben in den Untergrund ein. Da hierfür ein gewisser Widerstand zu überwinden ist, tritt eine entgegen der Gewichtskraft gerichtete Kraft auf. Im Extremfall kann das gesamte Gewicht der Maschine auf der Arbeitseinrichtung, insbesondere Fräswalze lasten. Aber auch, wenn dieser Extremfall nicht auftritt, ist die von den Fahreinrichtungen zu tragende Aufstandskraft reduziert. Aufgrund der Maschinengeometrie sind dabei insbesondere die Fahreinrichtungen betroffen, die den geringsten Abstand zu der Arbeitseinrichtung aufweisen. Deshalb tritt der Schlupf besonders bei der schwenkbaren Fahreinrichtung auf.

Der hydraulische Verstellmotor kann auch als regelbarer Hydraulikmotor bezeichnet werden. Ein hydraulischer Verstellmotor oder auch regelbarer Hydraulikmotor ist ein Hydraulikmotor oder Hydromotor, der durch eine Druckflüssigkeit angetrieben wird und bei gleichbleibendem Volumenstrom und gleichbleibendem Druck der Hydraulikflüssigkeit, insbesondere in der dem jeweiligen hydraulischen Verstellmotor zugeordneten hydraulischen Versorgungsleitung, in der Drehzahl und/oder Drehmoment verstellbar ist.

Der hydraulische Konstantmotor kann auch als nicht-regelbarer Hydraulikmotor bezeichnet werden. Ein hydraulischer Konstantmotor oder auch nicht-regelbarer Hydraulikmotor ist ein Hydraulikmotor oder Hydromotor, der durch eine Druckflüssigkeit angetrieben wird und eine konstante Drehzahl aufweist bzw. bei gleichbleibendem Volumenstrom der Hydraulikflüssigkeit, insbesondere in der dem jeweiligen hydraulischen Konstantmotor zugeordneten hydraulischen Versorgungsleitung, in der Drehzahl nicht verstellbar ist.

Üblicherweise sind die Verstellmotoren in ihrem Schluckvolumen zwischen einem Minimum, insbesondere von Null und einem maximalen Schluckvolumen einstellbar. Unter Schluckvolumen versteht man in der Fluidtechnik bei Hydraulikmotoren jene Menge an Hydraulikflüssigkeit, die der Hydraulikmotor pro Umdrehung verbraucht. Bei Verstellmotoren ist das Schluckvolumen variabel. Selbstfahrenden Baumaschinen gemäß des Standes der Technik weisen üblicherweise ein hydraulisches Antriebssystem auf, das zum Antreiben einer angetriebenen Fahreinrichtung einen hydraulischen Konstantmotor aufweist und zum Antreiben der restlichen angetriebenen Fahreinrichtungen jeweils einen hydraulischen Verstellmotor aufweist. Das Schluckvolumen des Konstantmotors entspricht dabei dem maximalen Schluckvolumen der Verstellmotoren. Hierdurch wird erreicht, dass, bei Einstellung des maximalen Schluckvolumens der Verstellmotoren alle an der Baumaschine vorhandenen Hydraulikmotoren mit gleichen Betriebsparametern betrieben werden können. Insbesondere stellen dann, bei Einstellung des maximalen Schluckvolumens an den Verstellmotoren, das dem Schluckvolumen des Konstantmotors entspricht, alle Hydraulikmotoren bei gleichem Hydraulikvolumenstrom gleiche Drehzahlen und Drehmomente an den jeweiligen Abtriebswellen bereit.

Ferner besteht das Problem, wenn die Baumaschine sich nicht im Arbeitsbetrieb befindet und lediglich mit hoher Geschwindigkeit von einem Ort zum anderen fahren soll, dass die Fahreinrichtung die an dem Konstantmotor eingeordnet ist, die maximale Geschwindigkeit der Baumaschine begrenzt.

Aufgabe der vorliegenden Erfindung ist es daher, bei den eingangs genannten Baumaschinen den Fräsbetrieb und auch den Transportbetrieb zu verbessern.

Gelöst wird diese Aufgabe durch die Merkmale der Ansprüche 1 und 13.

Die Erfindung sieht in vorteilhafter Weise vor, dass das Übersetzungsverhältnis des ersten Getriebes zwischen Konstantmotor und der dazugehörigen Fahreinrichtung geringer ist als die jeweiligen Übersetzungsverhältnisse der zweiten Getriebe, die jeweils zwischen den jeweiligen hydraulischen Verstellmotoren der jeweiligen Fahreinrichtung angeordnet sind und / oder dass das Schluckvolumen des Konstantmotors kleiner ist als das maximale Schluckvolumen der Vertsellmotoren.

Jeder der Verstellmotoren weist jeweils ein minimales und ein maximales Schluckvolumen auf.

Wenn das Schluckvolumen des Konstantmotors kleiner ist als das maximale Schluckvolumen der Verstellmotoren kann das erste Getriebe auch das gleiche Übersetzungsverhältnis aufweisen wie die jeweiligen zweiten Getriebe.

Die vorliegende Erfindung hat den Vorteil, dass aufgrund eines geringen Übersetzungsverhältnisses am ersten Getriebe und/oder des kleineren Schluckvolumens des Konstantmotors im Fräsbetrieb ein kleineres Moment an der dem Konstantmotor zugeordneten Fahreinrichtung anliegt. Auf diese Weise kann die Schlupfgefahr an dieser Fahreinrichtung reduziert werden.

Ferner wird durch die erfindungsgemäße Ausgestaltung der Baumaschine gewährleistet, dass die Fahreinrichtung, bei der der Konstantmotor angeordnet ist, mit einer höheren Geschwindigkeit bewegt werden kann um die Baumaschine von einem Ort zum anderen Ort zu bewegen.

Bei Transportfahrten, wenn die Baumaschine lediglich von einem Ort zum anderen bewegt wird und üblicherweise kein Fräsbetrieb stattfindet, ist im Vergleich zum Fräsbetrieb kein hohes Antriebsmoment an den Fahreinrichtungen notwendig. Die vorhandenen Verstellmotoren können daher für Transportfahrten so eingestellt werden, dass eine hohe Drehzahl bei niedrigem Drehmoment ermöglicht wird, um somit die Fahrgeschwindigkeit der Baumaschine zu optimieren. Hierzu wird das Schluckvolumen der Verstellmotoren reduziert.

Eine solche Verstellung ist am Konstantmotor jedoch nicht möglich und dies hat im Stand der Technik zur Folge, dass ein Großteil des für den Fahrantrieb benötigten Volumenstroms für den Konstantmotor benötigt wird und dieser somit, in Verbindung mit der naturgemäß begrenzten Förderleistung der Hydraulikpumpe die maximal erreichbare Fahrgeschwindigkeit limitiert.

Durch die Verwendung eines vom Konstantmotor angetriebenen ersten Getriebes, dass ein kleineres Übersetzungsverhältnis aufweist als die von den Verstellmotoren angetriebenen zweiten Getriebe, kann an der von dem Konstantmotor angetriebenen Fahreinrichtung bei gleichem Hydraulikvolumenstrom eine im Vergleich zum Stand der Technik höhere Drehzahl erreicht werden.

Bei Verwendung eines Konstantmotors mit gegenüber dem maximalen Schluckvolumen der Verstellmotoren reduziertem Schluckvolumen wird, bei gleichem Volumenstrom ebenfalls eine höhere Drehzahl als im Stand der Technik erreicht. Besonders vorteilhaft kann somit eine höhere Fahrgeschwindigkeit der Baumaschine erreicht werden, oder die bereits im Stand der Technik erreichbare Geschwindigkeit bei geringerer Förderleistung der Hydraulikpumpe des Antriebssystems erreicht werden. Im zweiten Fall kann somit ein die Pumpe antreibender Verbrennungsmotor mit einer niedrigeren Drehzahl betrieben und somit können Kraftstoffbedarf und Emissionen reduziert werden.

Im Fräsbetrieb können die Verstellmotoren wie Konstantmotoren, d. h. mit konstantem Schluckvolumen betrieben werden. Besonders bevorzugt werden die Verstellmotoren mit maximalem Schluckvolumen betrieben, da hierdurch das maximale Drehmoment bereitgestellt werden kann.

Das Übersetzungsverhältnis ist das Verhältnis der Drehzahl des Antriebs zu der Drehzahl des Abtriebs oder auch das Moment des Abtriebs zu Moment des Antriebs.

Das Übersetzungsverhältnis des ersten Getriebes kann um mindestens 15 %, vorzugsweise um mindestens 20 %, geringer sein als das Übersetzungsverhältnis der jeweiligen zweiten Getriebe.

Alternativ oder zusätzlich kann das Schluckvolumen des Konstantmotors um mindestens 15 % vorzugsweise um mindestens 20 % kleiner ist als das maximale Schluckvolumen der Verstellmotoren.

Das Übersetzungsverhältnis des ersten Getriebes kann um 15 % bis 50 %, vorzugsweise um 30 % bis 40 %, geringer sein als das Übersetzungsverhältnis der jeweiligen zweiten Getriebe.

Alternativ oder zusätzlich kann das Schluckvolumen des Konstantmotors um 15% bis 50 %, vorzugsweise um 20 % bis 30 % geringer sein als das maximale Schluckvolumen der Verstellmotoren.

Das erste Getriebe und/oder das zweite Getriebe können jeweils ein Planetengetriebe sein.

Das hydraulische Antriebssystem kann hydraulische Mengenteiler aufweisen, die dem hydraulischen Volumenstrom in Teilvolumenströme aufteilt, wobei ein erster Teilvolumenstrom den Konstantmotor antreibt und die restlichen Teilvolumenströme jeweils einen hydraulischen Verstellmotor antreiben.

Bei den Baumaschinen gemäß dem Stand der Technik sind Mengenteiler insbesondere im Fräsbetrieb relevant, dann werden (bei der Ausführung mit Mengenteiler) die Verstellmotoren im Wesentlichen wie Konstantmotoren betrieben. Dies bedeutet, dass sich alle 4 Motoren wie identische Konstantmotoren verhalten.

Der Mengenteiler sorgt dann für eine gleichmäßige Aufteilung der Volumenströme und damit dafür, dass die Drehzahlen an den Motoren gleich sind.

Bei der erfindungsgemäßen Lösung ist der Mengenteiler vorzugsweise ein asymmetrischer Mengenteiler, wobei der erste Teilvolumenstrom vorzugsweise ein kleinerer Volumenstrom ist als die restlichen Teilvolumenströme. Es kann auf diese Weise sichergestellt werden, dass die Fahreinrichtung, die am Konstantmotor angeordnet ist, mit der gleichen Drehzahl angetrieben wird wie die restlichen Fahreinrichtungen.

Das hydraulische Antriebssystem kann dem hydraulischen Konstantmotor zugeordneten Versorgungsleitung ein regelbares Ventil aufweisen.

Das regelbare Ventil kann ein Drosselventil oder ein Volumenstromregelventil sein.

Es können vier Fahreinrichtungen vorgesehen sein, die alle mittels des hydraulischen Antriebssystems antreibbar sind.

In dem hydraulischen Antriebssystem können die jeweiligen hydraulischen Verstellmotoren jeweils zwischen der hydraulischen Pumpe und dem jeweiligen zweiten Getriebe angeordnet sein.

Zumindest eine der wenigstens drei Fahreinrichtungen kann als schwenkbare Fahreinrichtung ausgeführt sein, so dass diese um mindestens eine vertikale Schwenkachse gegenüber dem Maschinenrahmen zwischen einer ersten eingeschwenkten und wenigstens einer zweiten ausgeschwenkten Position verschwenkbar ist. Der Konstantmotor und damit das erste Getriebe können vorzugsweise an der schwenkbaren Fahreinrichtung angeordnet sein.

Die hydraulischen Verstellmotoren können hydraulische Axialkolbenmotoren sein.

Die hydraulische Pumpe kann eine hydraulisch Axialkolbenpumpe sein.

Der hydraulische Konstantmotor kann ein nicht verstellbarer Axialkolbenmotor sein.

Zumindest eine Fahreinrichtung kann lenkbar sein. Es können auch zumindest zwei oder drei oder alle Fahreinrichtungen lenkbar sein. Die lenkbaren Fahreinrichtungen können jeweils um eine Längsachse lenkbar sein. Die Lenkachse verläuft vorzugsweise vertikal durch die Fahreinrichtung, wobei diese Achse insbesondere mittig durch die Fahreinrichtung verläuft.

Auch die schwenkbare Fahreinrichtung kann um eine Lenkachse lenkbar sein, wobei die vertikale Schwenkachse gegenüber der Lenkachse versetzt ist.

Gemäß der vorliegenden Erfindung kann auch ein Verfahren zum Bearbeiten von Bodenbelägen mit einer mit Hilfe von zumindest drei Fahreinrichtungen selbstfahrenden Baumaschine, insbesondere Straßenfräsmaschine, vorgesehen sein, bei der eine Arbeitseinrichtung, insbesondere eine Fräswalze den Bodenbelag bearbeitet, wobei zumindest zwei Fahreinrichtungen von einem hydraulischen Antriebssystem angetrieben werden, wobei das hydraulische Antriebssystem zumindest eine hydraulische Pumpe aufweist und wobei eine der angetriebenen Fahreinrichtungen mittels eines Konstantmotors angetrieben wird und die restlichen angetriebenen Fahreinrichtungen jeweils mittels eines hydraulischen Verstellmotors angetrieben werden, wobei zwischen dem Konstantmotor und der dazugehörigen Fahreinrichtung ein erstes Getriebe angeordnet ist, und wobei zwischen den restlichen angetriebenen Fahreinrichtungen und den jeweiligen hydraulischen Verstellmotoren jeweils ein zweites Getriebe angeordnet ist.

Das ersten Getriebe zwischen Konstantmotor und der dazugehörigen Fahreinrichtung kann mit einem Übersetzungsverhältnis betrieben werden, das geringer ist als die jeweiligen Übersetzungsverhältnisse der zweiten Getriebe, die jeweils zwischen den jeweiligen hydraulischen Verstellmotoren und der jeweiligen Fahreinrichtung angeordnet sind und/oder das Schluckvolumen des Konstantmotors kann kleiner sein als das maximale Schluckvolumen der Verstellmotoren.

Das erste Getriebe kann mit einem Übersetzungsverhältnis getrieben werden, das um mindestens 15 %, vorzugsweise mindestens 20 %, geringer ist als die jeweiligen Übersetzungsverhältnisse der zweiten Getriebe.

Alternativ oder zusätzlich kann das Schluckvolumen des Konstantmotors um mindestens 15 % vorzugsweise um mindestens 20 % kleiner ist als das maximale Schluckvolumen der Verstellmotoren.

Das Übersetzungsverhältnis des ersten Getriebes mit einem Übersetzungsverhältnis betrieben werden, das um 15 % bis 50 %, vorzugsweise um 30 % bis 40 %, geringer sein kann als das Übersetzungsverhältnis der jeweiligen zweiten Getriebe.

Alternativ oder zusätzlich kann das Schluckvolumen des Konstantmotors um 15% bis 50 %, vorzugsweise um 20 % bis 30 % geringer sein als das maximale Schluckvolumen der Verstellmotoren.

Zumindest eine der wenigstens drei Fahreinrichtungen kann als schwenkbare Fahreinrichtung ausgeführt sein, die um eine vertikale Schwenkachse gegenüber dem Maschinenrahmen zwischen einer ersten eingeschwenkten und wenigstens einer zweiten ausgeschwenkten Position verschwenkt werden kann, und wobei zumindest eine der mindestens zwei angetriebenen Fahreinrichtung die schwenkbare Fahreinrichtung ist.

Der hydraulische Konstantmotor kann über ein regelbares Ventil angesteuert werden.

Es zeigen schematisch:
- Fig. 1: eine erfindungsgemäße Baumaschine,
- Fig. 2: eine Draufsicht auf die erfindungsgemäße Baumaschine,
- Fig. 3: Antriebsstränge der Baumaschine,
- Fig. 4: eine schematische Übersicht über ein hydraulisches Antriebssystem,
- Fig. 5: eine schematische Übersicht über ein alternatives hydraulisches Antriebssystem,
- Fig.6a-6c: Bewegung der verschwenkbaren Fahreinrichtung.

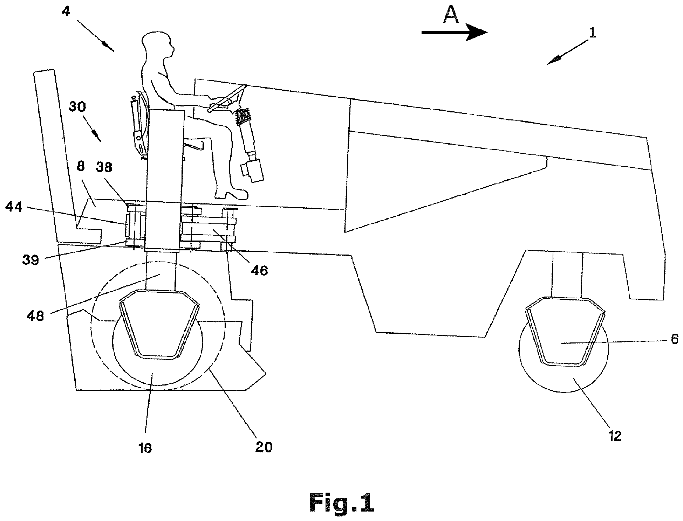

Fig. 1 zeigt eine selbstfahrende Baumaschine 1. Im dargestellten Ausführungsbeispiel ist die selbstfahrende Baumaschine eine Straßenfräsmaschine. Die Baumaschine 1 weist einen Maschinenrahmen 8 auf und zumindest drei Fahreinrichtungen 12, 16. Die dargestellte Baumaschine 1 weist zwei vordere und zwei hintere Fahreinrichtungen 12, 16 auf, von denen in Fig.1 die jeweils in Arbeitsrichtung A links angeordneten Laufwerke nicht sichtbar sind. Die Fahreinrichtungen können, wie im dargestellten Ausführungsbeispiel, Räder oder alternativ auch Kettenlaufwerke sein.

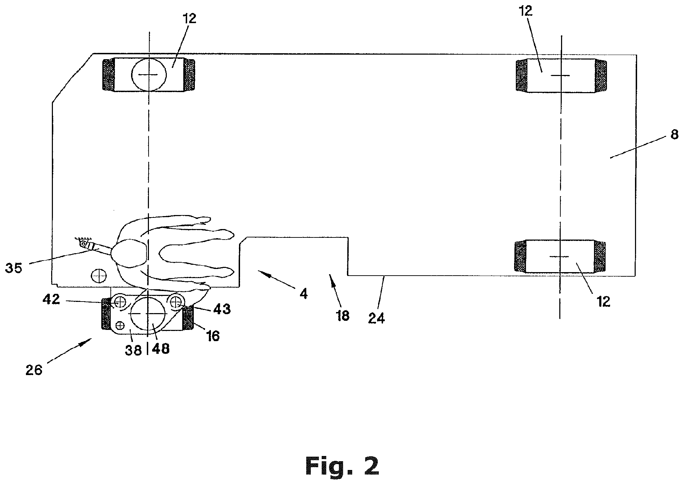

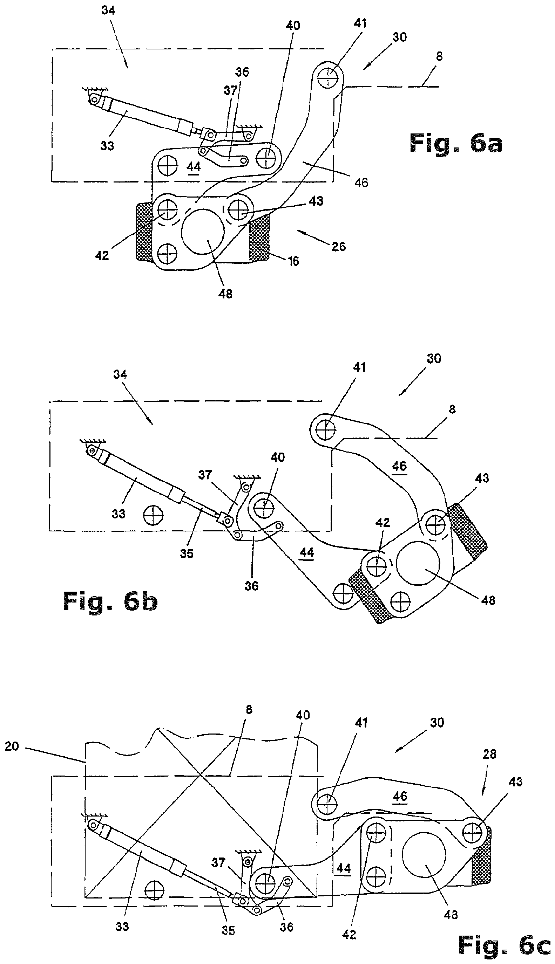

Die Fahreinrichtungen 12, 16 können jeweils mittels zumindest eines hydraulischen Antriebssystems 70 angetrieben sein. Bei einer Baumaschine 1 können zumindest zwei der Fahreinrichtungen 12, 16 angetrieben sein, wobei beispielsweise die vorderen Fahreinrichtungen auch nicht angetrieben sein können. Eine der mindestens drei Fahreinrichtungen 12, 16 kann, wie im dargestellten Ausführungsbeispiel gezeigt, als schwenkbare Fahreinrichtung 16 ausgeführt sein. Diese kann um mindestens eine vertikale Schwenkachse gegenüber dem Maschinenrahmen 8 zwischen einer ersten eingeschwenkten und wenigstens einer zweiten ausgeschwenkten Position verschwenkbar sein. Dies wird anhand der Fign. 2 und 6 a-c näher erläutert.

Ferner ist zumindest eine Arbeitseinrichtung 20 vorgesehen, die wie im dargestellten Ausführungsbeispiel eine Fräswalze sein kann, um den Bodenbelag 3 zu bearbeiten. Auch die zumindest eine schwenkbare Fahreinrichtung 16 kann mittels des hydraulischen Antriebssystems 70 antreibbar sein. Wie Fig. 2 zu entnehmen ist, kann die Baumaschine 1 eine sogenannte Nullseite 24 aufweisen. Die Arbeitseinrichtung 20 kann mit ihrer einen Stirnseite nahezu bündig mit der Nullseite 24 des Maschinenrahmens 8 angeordnet sein, so dass auf der Nullseite der Baumaschine 1 ein kantennahes Arbeiten möglich ist. Hierzu wird die schwenkbare Fahreinrichtung 16 aus der in Fig. 2 dargestellten ausgeschwenkten Position 26 jenseits der Nullseitenebene nach innen in eine Aussparung 18 des Maschinenrahmens 8 eingeschwenkt, so dass die Außenkante der schwenkbaren Fahreinrichtung bündig mit der Nullseite 24 abschließen kann.

Die Schwenkeinrichtung für die schwenkbare Fahreinrichtung 16 kann ein Lenkergetriebe 30 aufweisen. Das Lenkergetriebe kann beispielsweise, wie dargestellt, vier vertikale Gelenkachsen aufweisende Gelenke 40, 41, 42, 43 und mit zwei in einer horizontalen Ebene verschwenkbaren Lenkern 44, 46 ausgebildet sein. Zwei Gelenke 40, 41 können ortsfest an dem Maschinenrahmen 8 und zwei Gelenke 42, 43 können an der schwenkbaren Fahreinrichtung 16 jeweils in zwei vertikale beabstandeten Tragplatten 38, 39 vorgesehen sein.

Die schwenkbare Fahreinrichtung kann auch in mehr als eine äußere ausgeschwenkte Position verschwenkbar sein.

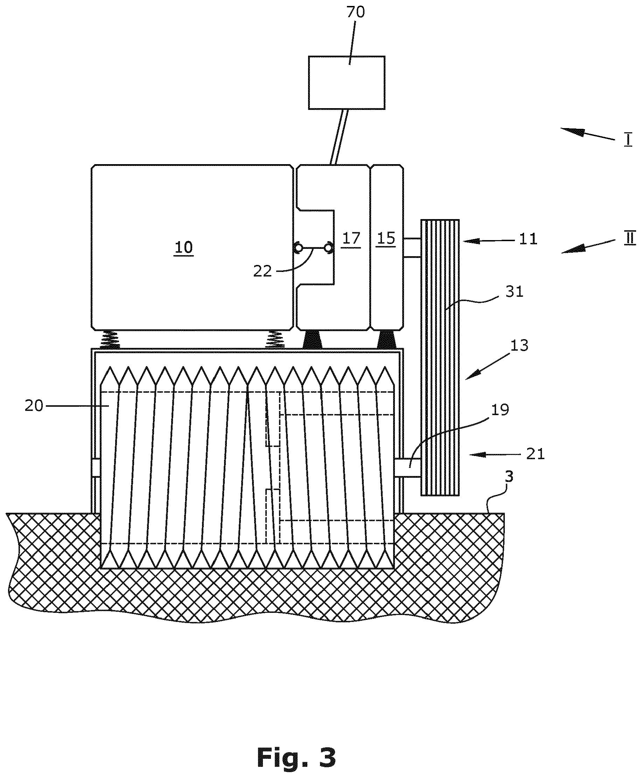

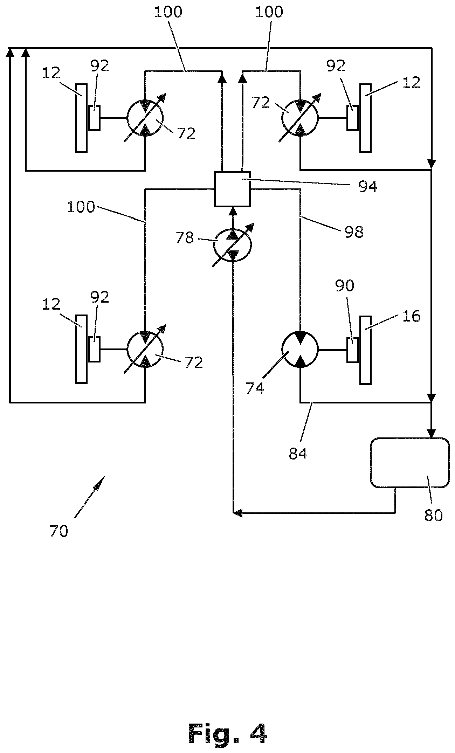

Fig. 3 zeigt einen Antriebsstrang der Baumaschine 1. Zur Übertragung der Antriebsleistung auf die Fahreinrichtungen 12, 16 dient ein erster Antriebsstrang I. Dieser umfasst ein hydraulisches Antriebssystem 70. Zur Übertragung der Antriebsleistung auf die Fräswalze 20 ist ein zweiter Antriebsstrang II vorgesehen. Der hydraulische Antriebsstrang 70 wird in der Fig. 4 näher erläutert. In der Fig. 3 ist der Antriebsstrang II zum Antrieb der Fräswalze 20 näher dargestellt. Es kann ein Antriebsmotor, insbesondere ein Verbrennungsmotor 10 vorgesehen sein. Der Antriebsmotor 10 kann über eine flexible Verbindung 22 mit einem Pumpenverteilgetriebe 17 zum Antreiben des ersten Antriebsstrangs I zum Antreiben eines hydraulischen Antriebssystems 70 zum Antreiben der Fahreinrichtung 12, 16 vorgesehen sein.

Im zweiten Antriebsstrang II zum Antreiben der Fräswalze 20 kann zwischen dem Antriebsmotor 10 und der Fräswalze 20 eine Schaltkupplung 15 vorgesehen sein. Die Schaltkupplung 15 kann eine Einrichtung zum Schalten des Drehmoments sein.

Zwischen der Schaltkupplung 15 und der Fräswalze 20 kann ein Zugmittelgetriebe 13 für den mechanischen Antrieb der Fräswalze 20 angeordnet sein. Das Zugmittelgetriebe 13 weist ein Antriebselement 11 auf, das mit der Antriebswelle des Antriebsmotors 10 drehfest gekoppelt ist. Ferner weist das Zugmittelgetriebe 13 ein Antriebselement 21 auf, das mit der Antriebswelle 19 der Fräswalze 20 drehfest gekoppelt ist. Zwischen Antriebswelle 19 und der Fräswalze 20 kann auch ein Getriebe angeordnet sein.

Das Zugmittelgetriebe 13 ist vorzugsweise ein Riemenantrieb, wobei die Antriebs- und Abtriebselemente aus Riemenscheiben 11, 21 bestehen können, über die ein oder mehrere Antriebsriemen 31 laufen, wobei die Antriebs- und Abtriebselemente aus Ritzeln bestehen können. Grundsätzlich kann der Antriebsmotor auch hydraulisch oder elektrisch sein.

In Fig. 4 ist das hydraulische Antriebssystem 70 grobschematisch dargestellt. Dieses hydraulische Antriebssystem weist zumindest eine hydraulische Pumpe 78, vorzugsweise eine hydraulische Verstellpumpe auf.

Das hydraulische Antriebssystem 70 weist zum Antreiben der angetriebenen Fahreinrichtung 16 einen hydraulischen Konstantmotor 74 auf und zum Antreiben der restlichen angetriebenen Fahreinrichtungen 12 jeweils einen hydraulischen Verstellmotor 72 auf.

Ferner kann das hydraulische Antriebssystem ein Hydraulikreservoir 80 aufweisen.

Ein hydraulischer Konstantmotor weist einen geringeren Bauraum auf als ein hydraulischer Verstellmotor.

Zwischen dem Konstantmotor 74 und der dazugehörigen Fahreinrichtung 16 ist ein erstes Getriebe 90 angeordnet und zwischen den restlichen angetriebenen Fahreinrichtungen 12 und den jeweiligen hydraulischen Verstellmotoren 72 ist jeweils ein zweites Getriebe 92 angeordnet.

Das Übersetzungsverhältnis des ersten Getriebes 90 zwischen Konstantmotor 74 und der dazugehörigen Fahreinrichtung 16 ist geringer als die jeweiligen Übersetzungsverhältnisse der zweiten Getriebe 92, die jeweils zwischen den jeweiligen hydraulischen Verstellmotoren 72 und der jeweiligen Fahreinrichtung 12 angeordnet sind. Das Übersetzungsverhältnis ist das Verhältnis der Drehzahl des Antriebs zu der Drehzahl des Abtriebs oder auch das Moment des Abtriebs zu Moment des Antriebs.

Dies hat den Vorteil, dass bei gleichem Volumenstrom ein niedrigeres Moment an der Fahreinrichtung 16 vorliegt und die am ersten Getriebe angeordnete Fahreinrichtung 16 mit höherer Drehzahl und die Maschine somit mit höherer Geschwindigkeit betrieben werden kann.

Es kann auch zusätzlich oder alternativ vorgesehen sein, dass das Schluckvolumen des Konstantmotors 74 kleiner ist als das maximale Schluckvolumen der Verstellmotoren 72. Bei Verwendung eines Konstantmotors 74 mit gegenüber dem maximalen Schluckvolumen der Verstellmotoren 72 reduziertem Schluckvolumen wird, bei gleichem Volumenstrom ebenfalls eine höhere Drehzahl als im Stand der Technik erreicht. Wenn das Schluckvolumen des Konstantmotors 74 kleiner ist als das maximale Schluckvolumen der Verstellmotoren 72 kann das erste Getriebe auch das gleiche Übersetzungsverhältnis aufweisen wie die jeweiligen zweiten Getriebe.

Es kann ein hydraulischer Mengenteiler 94 vorgesehen sein, der den hydraulischen Volumenstrom in Teilvolumenströme 98, 100 aufteilt, wobei ein erster Teilvolumenstrom 98 den Konstantmotor 74 antreibt und die restlichen Teilvolumenströme 100 jeweils einen hydraulischen Verstellmotor 72 antreiben. Der erste Teilvolumenstrom 98 und die restlichen Teilvolumenströme 100 sind vorzugsweise nicht gleich. Der erste Teilvolumenstrom 98 ist vorzugsweise kleiner als die jeweiligen restlichen Teilvolumenströme 100.

Bei der erfindungsgemäßen Lösung ist der Mengenteiler ein asymmetrischer Mengenteiler, wobei der erste Teilvolumenstrom 98 vorzugsweise ein kleinerer Volumenstrom ist als die restlichen Teilvolumenströme 100. Es kann so sichergestellt werden, dass die Fahreinrichtung, die am Konstantmotor angeordnet ist, mit der gleichen Drehzahl angetrieben wird wie die restlichen Fahreinrichtungen.

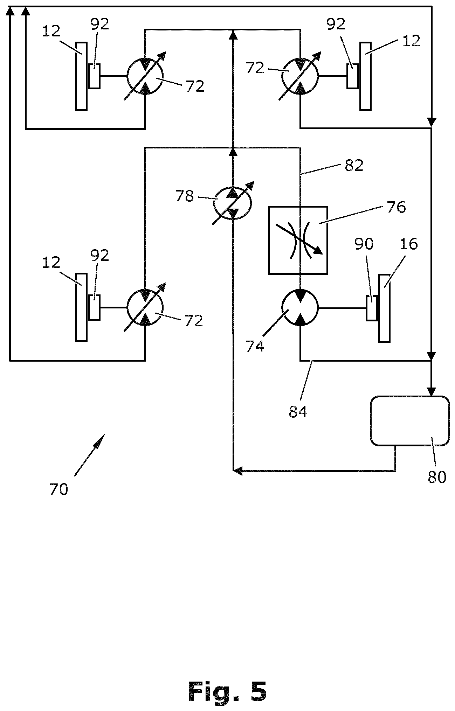

Fig. 5 zeigt ein alternatives Ausführungsbeispiel, das dem Ausführungsbeispiel aus Fig. 4 sehr ähnlich ist, jedoch mit dem Unterschied, dass anstelle des Mengenteilers 94 in den dem hydraulischen Konstantmotor 74 zugeordneten Versorgungsleitungen 82, 84 ein regelbares Ventil 76, insbesondere ein Drosselventil, angeordnet ist. Die einem hydraulischen Verstell- oder Konstantmotor zugeordneten hydraulischen Versorgungsleitungen sind jeweils die hydraulischen Leitungen in dem hydraulischen Antriebssystem 70, die von der hydraulischen Pumpe zu dem jeweiligen Verstell- oder Konstantmotor laufen oder auch von dem jeweiligen Verstell- oder Konstantmotor weg zu einem Hydraulikreservoir laufen. Die dem Konstantmotor im dargestellten Ausführungsbeispiel zugeordneten Versorgungsleitungen sind die Leitungen 82, 84. Die Versorgungsleitung 82 führt von der hydraulischen Pumpe 78 zu dem hydraulischen Konstantmotor 74. Die Versorgungsleitung 84 führt von dem Konstantmotor 74 zu dem Hydraulikreservoir 80. Im dargestellten Ausführungsbeispiel ist das regelbare Ventil 76 in der Versorgungsleitung 82 zwischen der hydraulischen Pumpe 78 und dem hydraulischen Konstantmotor 74 angeordnet.

Mittels des regelbaren Ventils 76 kann der hydraulische Konstantmotor 74 derart angesteuert werden, dass ein ähnliches Verhalten erreicht werden kann, wie bei einem hydraulischen Verstellmotor. Das als Drosselventil ausgeführte regelbare Ventil 76 ist vorzugsweise ein Proportionalventil. Über das Drosselventil kann der Druckabfall an dem Drosselventil und damit der Hydraulikdruck am Hydraulikmotor geändert werden, wodurch das Moment des Konstantmotors angepasst wird.

Grundsätzlich ist es auch möglich mit einem Volumenstromregelventil anstelle eines Drosselventils den Volumenstrom zu Regeln und damit die Drehzahl des Hydraulikmotors und somit auch der Fahreinrichtung vorzugeben.

In den Fig. 6a bis 6c ist noch einmal näher dargestellt, wie die schwenkbare Fahreinrichtung 16 verschwenkt werden kann. Die Fahreinrichtung 16 kann von einer zweiten ausgeschwenkten Position 26 in eine erste eingeschwenkte Position 28 mit Hilfe einer Antriebseinrichtung 34 bewegt werden. Es kann auch mehr als eine ausgeschwenkte Position existieren.

Die Antriebseinrichtung 34 besteht aus einer hydraulischen KolbenZylindereinheit 33 mit einer Schubstange 35 und zwei Lenkerarmen 36, 37. Der Lenkerarm 37 ist als zweiarmiger Hebel gestaltet, wobei das eine Ende an dem Maschinenrahmen 8 gelagert ist und das andere Ende mit dem zweiten Lenkerarm 36 gelenkig verbunden ist. Das andere Ende des zweiten Lenkerarms 36 ist mit dem Lenker 44 der Schwenkeinrichtung verbunden.

Die Schubstange 35 kann von dem Fahrzeugführer auf dem Fahrerstand 4 betätigt werden. In der eingezogenen Position der Schubstange 35 befindet sich die Fahreinrichtung 16 in der zweiten ausgeschwenkten Position, über der Nullseite 24 überstehend. Im ausgefahrenen Zustand der Schubstange 35 wird das Lenkergetriebe 30 verschwenkt, so dass die Fahreinrichtung 16 in die erste eingeschwenkte Position bewegt werden kann. Vor dem Schwenkvorgang kann die Fahreinrichtung 16 mit Hilfe der Hubsäule 48 angehoben werden, damit die Fahreinrichtung 16 ohne Bodenkontakt verschwenkt werden kann. In der ersten eingeschwenkten Position kann eine Arretierung des Lenkergetriebes 30 erfolgen. Prinzipiell sind auch andere Schwenkvorrichtungen bekannt bei denen das Verschwenken beispielsweise unter Beibehaltung des Bodenkontakts der Fahreinrichtung 16 erfolgen kann.

Die schwenkbare Fahreinrichtung 16 kann um vertikale Schwenkachsen 40, 41 verschwenkbar sein. Die vertikale Schwenkachse, um die die schwenkbare Fahreinrichtung verschwenkt werden kann, kann auch verschiebbar sein.

## Patentansprüche

1. Selbstfahrende Baumaschine (1), insbesondere Straßenfräsmaschine, mit
- einem Maschinenrahmen (8),
- zumindest drei Fahreinrichtungen (12, 16),
- zumindest einer Arbeitseinrichtung, insbesondere einer Fräswalze (20), zum Bearbeiten des Bodenbelags (3), und
- zumindest einem hydraulischen Antriebssystem (70) zum Antreiben mindestens zweier Fahreinrichtungen (12, 16), wobei das hydraulische Antriebssystem (70) zumindest eine hydraulische Pumpe (78) aufweist,
**dadurch gekennzeichnet, dass** das hydraulische Antriebssystem (70) zum Antreiben einer angetriebenen Fahreinrichtung (16) einen hydraulischen Konstantmotor (74) aufweist und zum Antreiben der restlichen angetriebenen Fahreinrichtungen (12) jeweils einen hydraulischen Verstellmotor (72) aufweist, wobei zwischen dem Konstantmotor (74) und der dazugehörigen Fahreinrichtung (16) ein erstes Getriebe (90) angeordnet ist und wobei zwischen den restlichen angetriebenen Fahreinrichtungen (12) und den jeweiligen hydraulischen Verstellmotoren (72) jeweils ein zweites Getriebe (92) angeordnet ist, wobei das Übersetzungsverhältnis des ersten Getriebes (90) zwischen Konstantmotor (74) und der dazugehörigen Fahreinrichtung (16) geringer ist als die jeweiligen Übersetzungsverhältnisse der zweiten Getriebe (92),
die jeweils zwischen der jeweiligen hydraulischen Verstellmotoren (72) und der jeweiligen Fahreinrichtung (12) angeordnet sind und/oder wobei das Schluckvolumen des Konstantmotors (74) kleiner ist als das maximale Schluckvolumen der Verstellmotoren (72).

2. Baumaschine (1) nach Anspruch 1, **dadurch gekennzeichnet, dass** das Übersetzungsverhältnis des ersten Getriebes (90) um mindestens 15 %, vorzugsweise um mindestens 20 % geringer ist als das Übersetzungsverhältnis der jeweiligen zweiten Getriebe (92) und/oder das Schluckvolumen des Konstantmotors (74) um mindestens 15 % vorzugsweise um mindestens 20 % kleiner ist als das maximale Schluckvolumen der Verstellmotoren (72).

3. Baumaschine (1) nach Anspruch 2, **dadurch gekennzeichnet, dass** das Übersetzungsverhältnis des ersten Getriebes (90) um 15 % bis 50 %, vorzugsweise um 20 % bis 30 % geringer ist als das Übersetzungsverhältnis der jeweiligen zweiten Getriebe (92) und/oder das Schluckvolumen des Konstantmotors (74) um 15 % bis 50 %, vorzugsweise um 20 % bis 30 % geringer ist als das maximale Schluckvolumen der Verstellmotoren (72).

4. Baumaschine (1) nach einem der Ansprüche 1 bis 3, **dadurch gekennzeichnet, dass** das erste und/oder das zweite Getriebe (90, 92) ein Planetengetriebe ist.

5. Baumaschine (1) nach einem der Ansprüche 1 bis 4, **dadurch gekennzeichnet, dass** das hydraulische Antriebssystem (70) einen hydraulischen Mengenteiler aufweist, der den hydraulischen Volumenstrom in Teilvolumenstörme aufteilt, wobei ein erster Teilvolumenstrom (98) den Konstantmotor (74) antreibt und die restlichen Teilvolumenströme (100) jeweils einen hydraulischen Verstellmotor (72) antreiben.

6. Baumaschine (1) nach einem der Ansprüche 1 bis 4, **dadurch gekennzeichnet, dass** das hydraulische Antriebssystem (70) in den dem hydraulischem Konstantmotor (74) zugeordneten Versorgungsleitungen (82, 84) ein regelbares Ventil (76) aufweist.

7. Baumaschine (1) nach Anspruch 6, **dadurch gekennzeichnet, dass** das regelbare Ventil ein Drosselventil oder ein Volumenstromregelventil ist.

8. Baumaschine (1) nach einem der Ansprüche 1 bis 7, **dadurch gekennzeichnet, dass** vier Fahreinrichtungen (12, 16) vorgesehen sind, die alle mittels des hydraulischen Antriebssystems (70) antreibbar sind.

9. Baumaschine (1) nach einem der Ansprüche 1 bis 8, **dadurch gekennzeichnet, dass** zumindest eine der drei Fahreinrichtungen (12, 16) als schwenkbare Fahreinrichtung (16) ausgeführt ist, so dass diese um mindestens eine vertikale Schwenkachse gegenüber dem Maschinenrahmen (8) zwischen einer ersten eingeschwenkten (28) und wenigstens einer zweiten ausgeschwenkten Position (26) verschwenkbar ist, wobei vorzugsweise der Konstantmotor an der schwenkbaren Fahreinrichtung angeordnet ist.

10. Baumaschine (1) nach einem der Ansprüche 1 bis 9, **dadurch gekennzeichnet, dass** die hydraulischen Verstellmotoren (72) hydraulische Axialkolbenmotoren sind.

11. Baumaschine (1) nach einem der Ansprüche 1 bis 10, **dadurch gekennzeichnet, dass** die hydraulische Pumpe (78) eine hydraulische Axialkolbenpumpe ist.

12. Baumaschine (1) nach einem der Ansprüche 1 bis 11, **dadurch gekennzeichnet, dass** der hydraulische Konstantmotor (74) ein nicht verstellbarer Axialkolbenmotor ist.

13. Verfahren zum Bearbeiten von Bodenbelägen mit einer mit Hilfe von zumindest drei Fahreinrichtungen (12, 16) selbstfahrenden Baumaschine (1) mit einem Maschinenrahmen (8), insbesondere Straßenfräsmaschine, bei der eine Arbeitseinrichtung, insbesondere eine Fräswalze (20), den Bodenbelag bearbeitet, wobei zumindest zwei Fahreinrichtungen von einem hydraulischen Antriebssystem (70) angetrieben werden, wobei das hydraulische Antriebssystem (70) zumindest eine hydraulische Pumpe (78) aufweist,
**dadurch gekennzeichnet,** -dass eine der angetriebene Fahreinrichtungen mittels eines Konstantmotors (74) angetrieben wird und die restlichen angetriebenen Fahreinrichtungen jeweils mittels eines hydraulischen Verstellmotors (72) angetrieben werden, wobei zwischen dem Konstantmotor (74) und der dazugehörigen Fahreinrichtung (16) ein erstes Getriebe (90) angeordnet ist und wobei zwischen den restlichen angetriebenen Fahreinrichtungen (12) und den jeweiligen hydraulischen Verstellmotoren (72) jeweils ein zweites Getriebe (92) angeordnet ist,
wobei das erste Getriebe (90) zwischen Konstantmotor (74) und der dazugehörigen Fahreinrichtung (16) mit einem Übersetzungsverhältnis betrieben wird, das geringer ist als die jeweiligen Übersetzungsverhältnisse der zweiten Getriebe (92) die jeweils zwischen den jeweiligen hydraulischen Verstellmotoren (72) und der jeweiligen Fahreinrichtung (12) angeordnet sind und/oder wobei das Schluckvolumen des Konstantmotors (74) kleiner ist als das maximale Schluckvolumen der Verstellmotoren (72).

14. Verfahren nach Anspruch 13, **dadurch gekennzeichnet, dass** das erste Getriebe (90) mit einem Übersetzungsverhältnis betrieben wird, das um mindestens 15%, vorzugsweise mindestens 20% geringer ist als die jeweiligen Übersetzungsverhältnisse der zweiten Getriebe (92) und/oder das Schluckvolumen des Konstantmotors (74) um mindestens 15 % vorzugsweise um mindestens 20 % kleiner ist als das maximale Schluckvolumen der Verstellmotoren (72).

15. Verfahren nach Anspruch 13 oder 14, **dadurch gekennzeichnet, dass** zumindest eine der drei Fahreinrichtungen (12, 16) als schwenkbare Fahreinrichtung (16) aufgeführt ist, die um zumindest eine vertikale Schwenkachse gegenüber dem Maschinenrahmen (8) zwischen einer ersten eingeschwenkten und wenigstens einer zweiten ausgeschwenkten Position (28, 26) verschwenkt werden kann und wobei zumindest eine der mindestens zwei angetriebenen Fahreinrichtungen (12, 16) die schwenkbare Fahreinrichtung (16) ist.

## Claims

1. A self-propelled construction machine (1), in particular road milling machine, comprising
- a machine frame (8),
- at least three travelling devices (12, 16),
- at least one working device, in particular a milling drum (20), for working the ground pavement (3), and
- at least one hydraulic drive system (70) for driving at least two travelling devices (12, 16), wherein the hydraulic drive system (70) comprises at least one hydraulic pump (78),
**characterized in that**
- the hydraulic drive system (70) comprises a hydraulic fixed displacement motor (74) for driving a driven travelling device (16), and one each hydraulic variable displacement motor (72) for driving the remaining driven travelling devices (12), wherein a first gearbox (90) is arranged between the fixed displacement motor (74) and the associated travelling device (16), and wherein one each second gearbox (92) is arranged between the remaining driven travelling devices (12) and the respective hydraulic variable displacement motors (72), wherein the transmission ratio of the first gearbox (90) between the fixed displacement motor (74) and the associated travelling device (16) is lower than the respective transmission ratios of the second gearboxes (92), which are each arranged between the respective hydraulic variable displacement motors (72) and the respective travelling device (12), and/or wherein the displacement volume of the fixed displacement motor (74) is smaller than the maximum displacement volume of the variable displacement motors (72).

2. The construction machine (1) in accordance with claim 1, **characterized in that** the transmission ratio of the first gearbox (90) is lower by a minimum of 15%, preferably by a minimum of 20%, than the transmission ratio of the respective second gearboxes (92), and/or the displacement volume of the fixed displacement motor (74) is smaller by a minimum of 15%, preferably by a minimum of 20%, than the maximum displacement volume of the variable displacement motors (72).

3. The construction machine (1) in accordance with claim 2, **characterized in that** the transmission ratio of the first gearbox (90) is lower by 15% to 50%, preferably by 20% to 30%, than the transmission ratio of the respective second gearboxes (92), and/or the displacement volume of the fixed displacement motor (74) is smaller by 15% to 50%, preferably by 20% to 30%, than the maximum displacement volume of the variable displacement motors (72).

4. The construction machine (1) in accordance with any one of claims 1 to 3, **characterized in that** the first and/or the second gearbox (90, 92) is a planetary gearbox.

5. The construction machine (1) in accordance with any one of claims 1 to 4, **characterized in that** the hydraulic drive system (70) comprises a hydraulic flow divider, which divides the hydraulic volumetric flow rate into partial volumetric flow rates, wherein a first partial volumetric flow rate (98) drives the fixed displacement motor (74), and the remaining partial volumetric flow rates (100) each drive one hydraulic variable displacement motor (72).

6. The construction machine (1) in accordance with any one of claims 1 to 4, **characterized in that** the hydraulic drive system (70) comprises a controllable valve (76) in the supply lines (82, 84) assigned to the hydraulic fixed displacement motor (74).

7. The construction machine (1) in accordance with claim 6, **characterized in that** the controllable valve is a throttle valve or a volumetric flow rate control valve.

8. The construction machine (1) in accordance with any one of claims 1 to 7, **characterized in that** four travelling devices (12, 16) are provided, all of which are drivable by means of the hydraulic drive system (70).

9. The construction machine (1) in accordance with any one of claims 1 to 8, **characterized in that** at least one of the three travelling devices (12, 16) is realized as a pivotable travelling device (16) so that said travelling device (16) is pivotable about at least one vertical pivoting axis in relation to the machine frame (8) between a first pivoted-in (28) and at least one second pivoted-out position (26), wherein the fixed displacement motor is preferably arranged on the pivotable travelling device.

10. The construction machine (1) in accordance with any one of claims 1 to 9, **characterized in that** the hydraulic variable displacement motors (72) are hydraulic axial piston motors.

11. The construction machine (1) in accordance with any one of claims 1 to 10, **characterized in that** the hydraulic pump (78) is a hydraulic axial piston pump.

12. The construction machine (1) in accordance with any one of claims 1 to 11, **characterized in that** the hydraulic fixed displacement motor (74) is a nonadjustable axial piston motor.

13. A method for working ground pavements using a construction machine (1) self-propelled by means of at least three travelling devices (12, 16) and having a machine frame (8), in particular road milling machine, in which a working device, in particular a milling drum (20), works the ground pavement, wherein at least two travelling devices are driven by a hydraulic drive system (70), wherein the hydraulic drive system (70) comprises at least one hydraulic pump (78),
**characterized in that**
one of the driven travelling devices is driven by means of a fixed displacement motor (74) and the remaining driven travelling devices are each driven by means of a hydraulic variable displacement motor (72), wherein a first gearbox (90) is arranged between the fixed displacement motor (74) and the associated travelling device (16), and wherein one each second gearbox (92) is arranged between the remaining driven travelling devices (12) and the respective hydraulic variable displacement motors (72),
wherein the first gearbox (90) between the fixed displacement motor (74) and the associated travelling device (16) is operated at a transmission ratio that is lower than the respective transmission ratios of the second gearboxes (92), which are each arranged between the respective hydraulic variable displacement motors (72) and the respective travelling device (12), and/or wherein the displacement volume of the fixed displacement motor (74) is smaller than the maximum displacement volume of the variable displacement motors (72).

14. The method in accordance with claim 13, **characterized in that** the first gearbox (90) is operated at a transmission ratio that is lower by a minimum of 15%, preferably by a minimum of 20%, than the respective transmission ratios of the second gearboxes (92), and/or the displacement volume of the fixed displacement motor (74) is smaller by a minimum of 15%, preferably by a minimum of 20%, than the maximum displacement volume of the variable displacement motors (72).

15. The method in accordance with claim 13 or 14, **characterized in that** at least one of the three travelling devices (12, 16) is realized as a pivotable travelling device (16), which may be pivoted about at least one vertical pivoting axis in relation to the machine frame (8) between a first pivoted-in and at least one second pivoted-out position (28, 26), and wherein at least one of the at least two driven travelling devices (12, 16) is the pivotable travelling device (16).

## Revendications

1. Engin de chantier automoteur (1), en particulier fraiseuse routière, doté
- d'un châssis de machine (8),
- d'au moins trois dispositifs de déplacement (12, 16),
- d'au moins un dispositif de travail, en particulier un tambour de fraisage, pour traiter le revêtement de sol (3), et
- d'au moins un système d'entraînement hydraulique (70) pour l'entraînement d'au moins deux dispositifs de déplacement (12, 16), dans lequel le système d'entraînement hydraulique (70) comporte au moins une pompe hydraulique (78),
**caractérisé en ce que** le système d'entraînement hydraulique (70) comporte un moteur hydraulique à cylindrée constante (74) pour l'entraînement d'un dispositif de déplacement entraîné (16) et comporte respectivement un servomoteur hydraulique (72) pour l'entraînement des dispositifs de déplacement entraînés restants (12), dans lequel une première transmission (90) est disposée entre le moteur à cylindrée constante (74) et le dispositif de déplacement (16) qui lui est associé et dans lequel une deuxième transmission (92) est respectivement disposée entre les dispositifs de déplacement entraînés restants (12) et les servomoteurs hydrauliques respectifs (72), dans lequel le rapport de transmission de la première transmission (90) entre le moteur à cylindrée constante (74) et le dispositif de déplacement (16) qui lui est associé est plus petit que les rapports de transmission respectifs des deuxièmes transmissions (92) qui sont respectivement disposées entre les servomoteurs hydrauliques respectifs (72) et le dispositif de déplacement respectif (12) et/ou dans lequel le volume d'absorption du moteur à cylindrée constante (74) est inférieur au volume d'absorption maximal des servomoteurs (72).

2. Engin de chantier (1) selon la revendication 1, **caractérisé en ce que** le rapport de transmission de la première transmission (90) est inférieur d'au moins 15 %, de préférence d'au moins 20 %, au rapport de transmission des deuxièmes transmissions respectives (92) et/ou le volume d'absorption du moteur à cylindrée constante (74) est inférieur d'au moins 15 %, de préférence d'au moins 20 %, au volume d'absorption maximal des servomoteurs (72).

3. Engin de chantier (1) selon la revendication 2, **caractérisé en ce que** le rapport de transmission de la première transmission (90) est inférieur de 15 % à 50 %, de préférence de 20 % à 30 %, au rapport de transmission des deuxièmes transmissions respectives (92) et/ou le volume d'absorption du moteur à cylindrée constante (74) est inférieur de 15 % à 50 %, de préférence de 20 % à 30 %, au volume d'absorption maximal des servomoteurs (72).

4. Engin de chantier (1) selon l'une des revendications 1 à 3, **caractérisé en ce que** la première et/ou la deuxième transmission (90, 92) est un engrenage planétaire.

5. Engin de chantier (1) selon l'une des revendications 1 à 4, **caractérisé en ce que** le système d'entraînement hydraulique (70) comporte un distributeur de débit, lequel répartit le débit volumique hydraulique en débits volumiques partiels, dans lequel un premier débit volumique partiel (98) entraîne le moteur à cylindrée constante (74) et les débits volumiques restants (100) entraînent chacun un servomoteur hydraulique (72).

6. Engin de chantier (1) selon l'une des revendications 1 à 4, **caractérisé en ce que** le système d'entraînement hydraulique (70) comporte une vanne régulable (76) dans les conduites d'alimentation (82, 84) associées au moteur hydraulique à cylindrée constante (74).

7. Engin de chantier (1) selon la revendication 6, **caractérisé en ce que** la vanne régulable est une vanne d'étranglement ou une vanne régulatrice de débit.

8. Engin de chantier (1) selon l'une des revendications 1 à 7, **caractérisé en ce que** quatre dispositifs de déplacement (12, 16) sont prévus, lesquels peuvent tous être entraînés au moyen du système d'entraînement hydraulique (70).

9. Engin de chantier (1) selon l'une des revendications 1 à 8, **caractérisé en ce qu'**au moins un des trois dispositifs de déplacement (12, 16) est réalisé comme dispositif de déplacement pivotant (16), de sorte que celui-ci peut pivoter autour d'au moins un axe de pivot vertical par rapport au châssis de machine (8) entre une première position rétractée (28) et au moins une deuxième position déployée (26), dans lequel le moteur à cylindrée constante est de préférence disposé sur le dispositif de déplacement pivotant.

10. Engin de chantier (1) selon l'une des revendications 1 à 9, **caractérisé en ce que** les servomoteurs hydrauliques (72) sont des moteurs hydrauliques à piston axial.

11. Engin de chantier (1) selon l'une des revendications 1 à 10, **caractérisé en ce que** la pompe hydraulique (78) est une pompe hydraulique à piston axial.

12. Engin de chantier (1) selon l'une des revendications 1 à 11, **caractérisé en ce que** le moteur hydraulique à cylindrée constante (74) est un moteur à piston axial non ajustable.

13. Procédé de traitement de revêtements de sol avec un engin de chantier (1) automoteur à l'aide d'au moins trois dispositifs de déplacement (12, 16), doté d'un châssis de machine (8), en particulier une fraiseuse routière, pour lequel un dispositif de travail, en particulier un tambour de fraisage (20), traite le revêtement de sol, dans lequel au moins deux dispositifs de déplacement sont entraînés par un système d'entraînement hydraulique (70), dans lequel le système d'entraînement hydraulique (70) comporte au moins une pompe hydraulique (78),
**caractérisé en ce qu'**un des dispositifs de déplacement entraînés est entraîné au moyen d'un moteur à cylindrée constante (74) et les dispositifs de déplacement entraînés restants sont chacun entraînés au moyen d'un servomoteur hydraulique (72), dans lequel une première transmission (90) est disposée entre le moteur à cylindrée constante (74) et le dispositif de déplacement (16) qui lui est associé et dans lequel une deuxième transmission (92) est respectivement disposée entre les dispositifs de déplacement entraînés restants (12) et les servomoteurs hydrauliques respectifs (72), dans lequel la première transmission (90) entre le moteur à cylindrée constante (74) et le dispositif de déplacement (16) qui lui est associé fonctionne avec un rapport de transmission plus petit que les rapports de transmission respectifs des deuxièmes transmissions (92) qui sont respectivement disposées entre les servomoteurs hydrauliques respectifs (72) et le dispositif de déplacement respectif (12) et/ou
dans lequel le volume d'absorption du moteur à cylindrée constante (74) est inférieur au volume d'absorption maximal des servomoteurs (72).

14. Procédé selon la revendication 13, **caractérisé en ce que** la première transmission (90) fonctionne avec un rapport de transmission qui est inférieur d'au moins 15 %, de préférence d'au moins 20 %, aux rapports de transmission respectifs des deuxièmes transmissions (92) et/ou le volume d'absorption du moteur à cylindrée constante (74) est inférieur d'au moins 15 %, de préférence d'au moins 20 %, au volume d'absorption maximal des servomoteurs (72).

15. Procédé selon la revendication 13 ou 14, **caractérisé en ce qu'**au moins un des trois dispositifs de déplacement (12, 16) est réalisé comme dispositif de déplacement pivotant (16) pouvant être pivoté autour d'au moins un axe de pivot vertical par rapport au châssis de machine (8) entre une première position rétractée et au moins une deuxième position déployée (28, 26) et dans lequel au moins un des au moins deux dispositifs de déplacement entraînés (12, 16) est le dispositif de déplacement pivotant (16).
